# EUROPEAN PATENT SPECIFICATION

(11) **EP 2 259 963 B1**
(45) Date of publication and mention of the grant of the patent: **16.09.2015**
(21) Application number: 09730782.1
(22) Date of filing: 16.02.2009
(51) Int. Cl.: B63B 1/08, B63B 3/48, B63H 1/14, B63H 1/28, B63H 5/07

(54) **A METHOD OF PROVIDING A SHIP WITH A LARGE DIAMETER SCREW PROPELLER AND A SHIP HAVING A LARGE DIAMETER SCREW PROPELLER**
VERFAHREN ZUR AUSSTATTUNG EINES SCHIFFS MIT EINER ANTRIEBSSCHRAUBE VON HOHEM DURCHMESSER UND SCHIFF MIT ANTRIEBSSCHRAUBE VON HOHEM DURCHMESSER
PROCÉDÉ POUR ÉQUIPER UN NAVIRE D'UNE HÉLICE À GRAND DIAMÈTRE ET NAVIRE ÉQUIPÉ D'UNE HÉLICE À GRAND DIAMÈTRE

(30) Priority: 08.04.2008 SE 0800785; 05.05.2008 SE 0800996
(43) Date of publication of application: 15.12.2010
(73) Proprietor: Rolls-Royce Aktiebolag, 681 29 Kristinehamn (SE)
(72) Inventor: FORSSTRÖM, Jan-Olov, S-681 35 Kristinehamn (SE)
(74) Representative: Johansson, Lars-Erik
(86) International application number: PCT/SE2009/050157
(87) International publication number: WO 2009/126090

(56) References cited:
- EP-A1- 1 008 514
- WO-A1-01/56874
- WO-A1-98/13256
- WO-A1-98/13256
- WO-A1-2007/042483
- WO-A1-2007/077205
- DE-A1- 3 303 554
- JP-A- 62 116 397
- JP-A- 62 116 397
- US-A- 1 553 160
- US-A- 4 040 378
- US-A- 4 089 289
- US-A1- 2008 070 455

## Description

### TECHNICAL FIELD

The present invention relates to a method of increasing propulsion efficiency and onboard ship comfort performance.

It also relates to a ship having a propeller arrangement that provides increased propulsion efficiency and onboard ship comfort performance.

The term "ship" as used herein designates a marine vessel that usually has enough size to carry its own boats, such as lifeboats, dinghies, or runabouts. A rule of thumb used is "a boat can fit on a ship, but a ship can't fit on a boat".

Further, the term "transom" as used herein designates the surface that forms the stem of a vessel. Transoms may be flat or curved and they may be vertical, raked forward (known as retroussé), or raked aft. The bottom tip of the transom can be approximately on the waterline, in which case the stem of the vessel is referred to as a "transom stern", or the hull can continue so that the centerline is well above the waterline before terminating in a transom, in which case it is referred to as a "counter stern".

### BACKGROUND ART

One problem facing ship designers is that of keeping hull vibration to an acceptable level. Excessive vibration not only causes unpleasant noise in the vessel but may also produce dangerous stressing of the ship's structure. In addition, the forces causing hull vibration also cause other undesirable effects.

The problem of hull vibration arises more nowadays than in the past because ships are generally larger and more powerful. The increase in power results in an increase in the excitation forces which cause hull vibration and the increase in size makes the hull more susceptible to vibration by these forces.

A principal cause of hull vibration is pressure fluctuations in the water generated by the propeller which act on the hull above the propeller. Due to variations in the wake across the propeller disc, that is, the area swept out by the propeller blades, the blades undergo substantial changes in loading as the propeller rotates. With a conventional single screw stem construction, the maximum wake at the propeller disc may be as much as eight times the minimum wake there. One effect of the rapidly changing loading on the propeller blades as the propeller rotates is to produce the strong pressure pulses in the water which excite hull vibrations and may cause serious cavitation erosion of the propeller blades.

In a conventional ship, the stem profile is curbed rearwardly in an arc over the propeller and is then curved upwardly to form the aft extremity of the ship. This curved shape is necessary to provide the large clearance between the propeller and the part of the hull which lies above the propeller that is necessary in order to moderate the effects on the hull of the propeller-excited pressure fluctuations in the water, and to conform with the wake pattern produced by the rest of the ship. This curved shape is usually formed in one piece as a stem frame casting. For a 400,000 dwt ship, the stem frame may be 50 ft. high and weigh 600 tons. It is extremely expensive to manufacture and when it arrives at the shipyard it is often found to be twisted so that additional pieces have to be welded on to correct its shape.

US 3,983,829 suggests to solve this problem by making a complex profile adjacent the stem, comprising to improve the wake pattern and thereby enable fitting of a propeller of larger diameter. As is well known, improved propulsive efficiency can be obtained by reducing the shaft RPM and increasing the propeller diameter. However, as already mentioned the design suggested by US 3,983,829 is very complex and therefore indeed expensive, which most likely is one of the reasons why this known design from 1974 has never been a success on the market.

WO 98/13256 A1 discloses a method and a ship according to the preamble of the appended claims 1 and 7.

### DISCLOSURE OF THE INVENTION

The object of the present invention is to increase propulsion efficiency and on board ship comfort performance, which is achieved in accordance with the present invention as defined in the appending claims.

The above solutions to the stated problem will facilitate the possibility of increasing propeller diameter without increasing the induced pressure impulses to the hull and thus make possible to gain propulsion efficiency and increase the on board ship comfort performance.

Further advantages and aspects of the invention will become evident by the independent claims and the following description.

### BRIEF DESCRIPTION OF THE DRAWINGS

In the following, the invention will be described in more detail with reference to preferred embodiments and the appended drawings.
- Fig. 1: is a schematic side-view of a conventional, prior art,
- Fig. 2: is a schematic side-view of a first embodiment of a ship with a propulsion arrangement according to the invention,
- Fig. 3: is a second embodiment of a propulsion unit in accordance with the invention, and
- Fig. 4: is a third schematic side-view of an embodiment according to the invention.
- Fig. 5: is a view from behind of a ship based on a design according to Fig. 2.

### DETAILED DESCRIPTION OF THE DRAWINGS

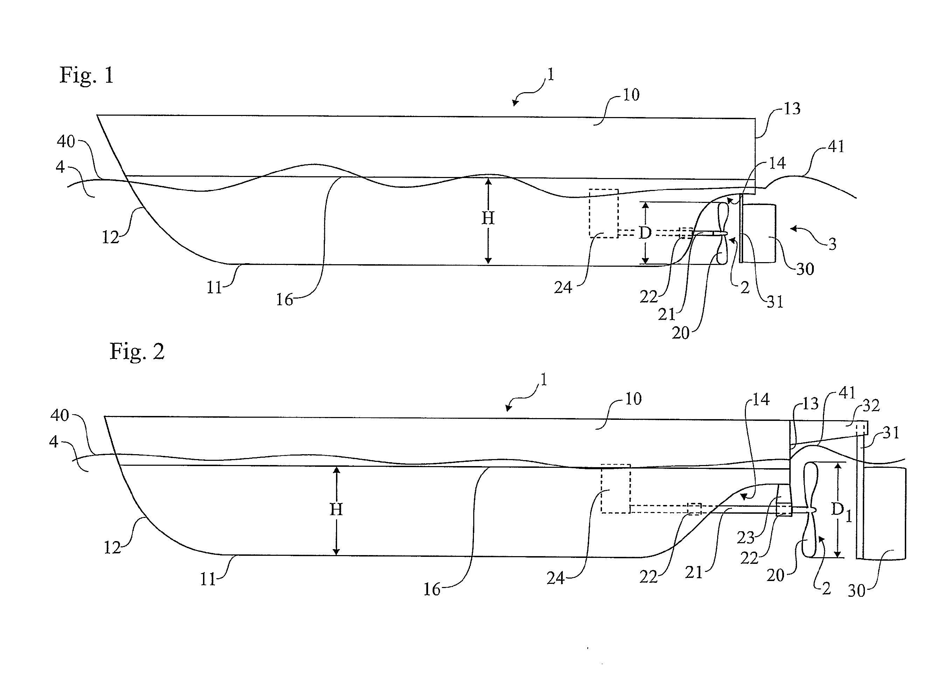

In Fig. 1 there is shown a side-view, schematically of a ship 1 according to prior art. The ship 1 has a hull 10 having a base line 11, a stem 12, a stem 14 and a transom 13. In the stem 14 there is arranged a propulsion unit 2, comprising a propeller 20 attached to a propeller shaft 21, which in turn is rotatably fixed by bearings 22 etc. to the hull 10. An engine 24 is arranged to propel the shaft 21. Aft of the propeller 20 there is arranged a rudder 3, comprising a spade rudder 30 attached on a rudder stock 31, which in turn is rotatably fixed in the stem 14 of the hull 10. Also there is shown the waterline 16 (the "design waterline" corresponding to the waterline for the ship 1 when carrying a "standard load" for its use). It is shown that the ship 1 is floating in water 4. The surface 40 of the water 4 is schematically shown as also the crest 41 of the rising wave existing at a distance behind transom 13 of the hull 10 when propelling the ship 1 at cruising speed. As is presented the diameter D of the propeller, according to prior art is normally at a maximum of about 80 % of the distance H between the base line 11 and the waterline 16, since firstly there must be sufficient clearance between the propeller tip and the hull not to create vibrations and secondly there must be a certain distance between the surface 40 and the propeller tip to not have air sucked in.

In Fig. 2 there is schematically shown a side-view of a ship 1 according to a first embodiment of the invention. The same reference numerals are used in connection with the invention as also for the ship shown in Fig. 1. As a consequence detailed explanation will merely be given regarding distinguishing/novel features. In comparison to a traditional ship, as shown in Fig. 1, the diameter D1 of the propeller 20 is much larger. This is achieved by mounting the propeller rotatably to the hull at a distance behind the transom 13 of the hull 10, wherein the distance aft of the transom is chosen such that the propeller 20 will be positioned substantially centrally in relation to the crest of the rising stem wave 41.

Thanks to positioning the propeller 20 at this position it may be feasible, as indicated in Fig. 2, to use a propeller 20 having an outer diameter D1 that is much larger than traditionally, i.e. sometimes possibly even larger than the distance H between the base line 11 and the deadweight waterline 16, due to the fact that the crest 41 is at a much higher level than the surrounding surface 40, mostly about 1-1,5 m higher for a midsized ship at cruising speed. In this regard it is to be understood that the invention is applicable to a large variety of ships, e.g. from 10 dwt (preferably at least 100 dwt) to 500.000 dwt, i.e. ships using relatively large propellers, e.g. from 0,5-15 m in diameter. Indeed the main focus is seagoing commercial vessels where the invention may have a drastically positive influence regarding both cost and environmentally. As a consequence a much higher power output may be achieved, merely due to the larger propeller diameter. Indeed some 7-15 % increased output efficiency may be achieved merely by that parameter, in accordance with the invention. Further, the novel positioning of the propeller 20 will no longer have any major impact regarding vibrations on the hull 10, which in turn provides improved comfort and indeed eliminates some traditional design restrictions. Moreover, it will also have a positive effect regarding load on the propeller, e.g. since the hull may be designed to create fewer pulsations at this position, compared to being positioned ahead of the transom.

To achieve the positioning of the propeller 20 at this aft position, the most rearward propeller bearing 22 according to the embodiment shown in Fig. 2 is carried by a support structure 23 positioned substantially vertically in relation to the transom 13. As a consequence the structure 23 will be positioned in front of the propeller 20. In order to further improve efficiency the profile of said supports may be formed (wing shaped) to produce a thrust ahead. Further these profiles may be used to create a kind of pre rotation/swirl assisting in further improving propeller efficiency, which thanks to the invention may be used in a synergetic manner, since a propeller of larger diameter is not restricted regarding surface load as is a traditional propeller of smaller diameter, which often implies that the pre rotation of the water (always created at some degree by the hull, e.g. about 3%) may not be utilised due to over load.

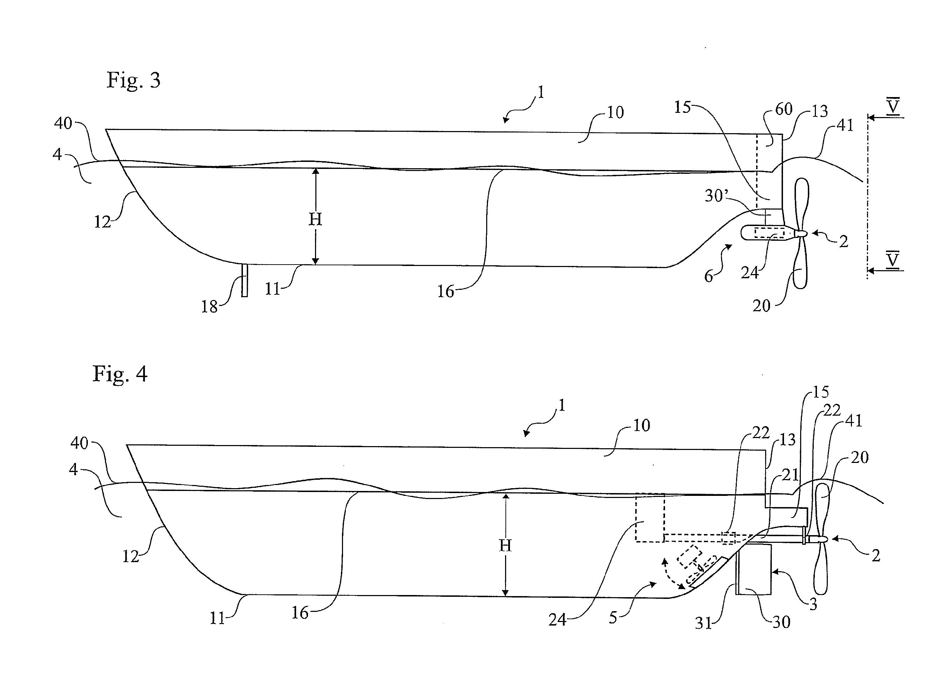

Further Fig. 2 shows that a rudder 30 may be positioned aft of the stem 14 and aft of the propeller 20. The rudder stock 31 is rotatably fixed in a support platform 32 protruding from the transom 13 well above the water surface 40. However, also other measures (known per se) may be taken, possibly alone or in any combination, to accomplish manoeuvre ability in low speed, e.g. the ship 1 may be arranged with tunnel thruster/s (not shown) and/or rotatable or non-rotatable thrusters/s (see Fig. 4, where a swing-up thrusters 5 is indicated).

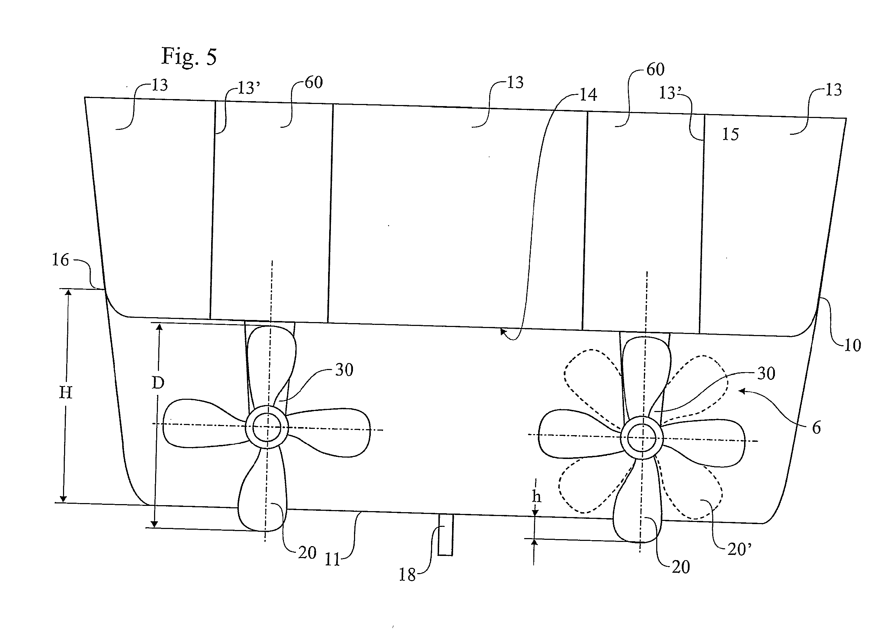

In Fig. 3 there is shown a side-view of a second embodiment according to the invention. As in Fig. 2 many of the features shown are the same as has already been described and therefore will not be described again. A major difference in relation to Fig. 2 is that in Fig. 3 there is used a rotatable thrusters, e.g. a pod unit 6. As a consequence also in this arrangement according to the invention a very large propeller 20 may be used that has it upper end near the deadweight waterline 16, but which thanks to the stem wave 41 is safely submerged in the water during cruising speed. As is conventional with pod unit 6 the vertical extending portion thereof 30' may be formed to act as a rudder. Here, the diameter D1 of the propeller 20 in some applications may be chosen within the range of about 85%-100 % of the height H between the base line 11 and the waterline 16. However, in the embodiment shown in Fig. 3 it is presented that the propeller 20 might even be designed to be much larger, i.e. having D1 to be more than 100% of H, e.g. about 130 %. This may be achieved in combination with a control system, including a break pin 18 protruding deeper than the propeller tip and which is position near/at the stem 12 of the ship 1. This system is described more in detail in relation to Fig. 5.

The hull construction shown in figs. 3 and 5 preferably comprises a structure at the transom 13 including interfaces/pockets 13' (see fig 5) for the pods 6 in the form of "containers" 60, i.e. modules in the form of containerized pod propulsors having the pod 6 fitted at the lower end and surrounding equipment included in a housing 60, which extends vertically across the transom 13 fitting into the pocket 13', and being secured mechanically by hydraulic controlled stud bolts. Thanks to the positioning of the pod unit 6 at this location its propeller 20 will be positioned a distance from the transom 13 to substantially be in line with the centre/peak of the crest wave 41.

In Fig. 4 there is shown a further embodiment according to the invention, having most features in common with the above described embodiments, which will therefore not be described again. A major difference in relation to Fig. 2 is that in Fig. 3 there is used a hull construction comprising a protruding support structure 15, which protrudes aft in relation to the transom 13. This protruding structure 15 is used to rotatably fit a pod unit 6. Also in Fig. 4 there is used a hull design having a support structure 15 protruding a distance behind the transom 13. However, the propulsive unit 2, is basically along the same lines as depicted in Fig. 2, i.e. a traditional inboard driven propeller 20. The propeller 20 has its shaft 21 attached to the support structure 15, by means of which secure positioning of the propeller may be achieved in an appropriate position within the crest 41 of the stem wave. Traditional kind of a rudder 3 is used, i.e. a spade rudder 30 attached to a rudder stock 31 positioned at the stem but a distance in front of the propeller 20. Here it is shown that there is arranged a retractable pod unit 5 that may be activated at low speed of the ship 1, to accomplish sufficient flow of water across the rudder 30 to achieve a steering function also at low speed.

In Fig. 5 there is shown a view from behind, i.e. presenting a ship 10 in accordance with the invention, but equipped with a pair of propellers, i.e. using more than one propeller is of course within the ambit of the invention.

Further, Fig. 5 depicts a modified design in combination with a specific control system for positioning the blade orientation to a prescribed position, if the ship enters into a shallow area. In a forward part of the ship bottom 11, for example on the bulbous bow, there is mounted a "break pin" 18 protruding downwards, having a length L that positions the end of the pin 18 a sufficient distance below beneath the base line 11, to protrude deeper than the distance h that any tip of the propeller may reach beneath the base line 11. Preferably, the break pin 18 is arranged to be retractable/swingable/- telescopic to enable it to "dip down" when needed, for instance in harbour or shallow water. Possibly (also) merely when sailing below a preset speed, since it will take some time to stop the propeller 20 to have it positioned in a safe position where the tips of blades 20' (see indication by dotted lines)do not protrude below the base line 11. Accordingly this concept of the invention may preferably be used in combination with low speed, since it will then be easier to provide an adequate arrangement (clutch, brake mechanism, etc) that may handle stopping and positioning the propeller/s 20 within the time frame of braking the pin 18 and arriving there with the propeller 20. For instance, many applications may be limited to a maximum speed of 7 knots. If the "break pin" 18 breaks, signal will be sent to the control system (not shown) to dis-clutch the shaft and brake down the shaft speed to zero and positioning the blades 20' to the prescribed position. For a 100 m ship the time frame for the control sequence would be about 28 sec at 7 knots. At 5 knots it would be about 39 sec. In combination with the other parameters of the invention this latter concept would make it possible to increase the propeller diameter with some 30-40 %, e.g. 41.4% if not considering the clearance to the hull. It means that a running propeller have its tip 41.4% of the radius beneath the "base line". For a 4 bladed propeller with a diameter of 5.3 m it means that it is possible to increase the diameter to 7.5 m with a loading that is half of the origin. This would give roughly 17 % improved propulsion efficiency.

In summary the following advantages may be gained by the invention;
- By increasing the propeller diameter at a given engine power supply, the distributed load on the propeller disc area is reduced. In practice this means that efficiency losses due to friction when accelerating the water is decreased and that the risk of the propeller sucking air from the atmosphere is reduced.
- Also, by positioning the propeller in the crest of the stern wave the margin to air suction will be further improved.
- Also, By taking use of the stern wave a higher "hull efficiency" thanks to reduced water velocities may be achieved, which implies a possible higher propulsive impulse,
- Also, by positioning the propeller away from the hull the suction on the hull from the propeller will be reduced, the so called thrust deduction factor, which together with the reduced water velocities also may be used to increase the hull efficiency.
- Furthermore the total wave system of the hull may be used in a synergistic manner, i.e. reducing the total resistance of the hull.

The invention is not limited by the examples described above but may be varied within the scope of the pending claims. For instance the skilled person realises from the above mentioned advantages that many of them are not directly related to positioning the propeller in the event of the wave, but indeed to the fact of having the propeller behind the transom, i.e. away from the hull. Further it is understood that in some occasions it may be advantageous to attached an additional support structure at the stern for supporting a rudder that could be positioned aft of the propeller 20 (positioned as depicted in Figs. 2-4), i.e. a rudder that will then be positioned aft of the crest 41 of the stern wave. However, in many installations such an extra support structure will not be desired.

## Claims

1. A method of providing a ship with a large diameter screw propeller (20), said ship having a hull (10) developing a rising wave, at cruising speed, at a distance behind a transom (13) of the hull, said ship having a vertical distance (H) between a base line (11) of the hull (10) and the waterline (16) of the ship, said method comprising:
- providing a screw propeller (20) with a diameter that is 50-200% of the vertical distance (H); **characterised by** comprising
- mounting the screw propeller (20) rotatably to the hull (10) at said distance behind the transom (13).

2. A method according to claim 1, wherein the propeller (20) has a diameter that is more than 100% of the vertical distance (H), and is positioned such that the propeller (20) will be submerged under the crest (41) of the wave when propelling the ship at cruising speed.

3. A method as claimed in claim 1 or 2, wherein the screw propeller (20) has a diameter that is 85-150%, of the vertical distance (H).

4. A method as claimed in claim 1, 2 or 3, further comprising providing a rudder (30) in front of said propeller (20).

5. A method as claimed in any of claims 1-4, further comprising:
- providing a support structure (15; 13', 60) adjacent the stem (14) of the ship (5);
- mounting the screw propeller (20) rotatably to the support structure (15; 13', 60) to form an assembly.

6. A method as claimed in claim 5, further comprising
- attaching the support structure (15) to protrude aft of the transom (13).

7. A ship having:
a hull (10) that develops a rising wave at a distance behind a transom (13) of the hull (10) when the ship is propelled at a cruising speed;
a vertical distance (H) between a base line (11) of the hull (10) and a waterline (16) of the ship (1); and
a large diameter screw propeller (20) having a diameter that is 50-200% of the vertical distance (H); **characterised in that** said large diameter screw propeller (20) is rotatably mounted to the hull (10) at said distance behind the transom (13).

8. A ship according to claim 7, wherein the propeller (20) has a diameter that is more than 100% of the vertical distance (H), and is positioned such that the propeller (20) will be submerged under the crest (41) of the wave when propelling the ship at cruising speed.

9. A ship as claimed in claim 7 or 8, wherein the screw propeller (20) has a diameter that is 85-150%, of the vertical distance (H).

10. A ship as claimed in claim 8 or 9, further comprising a rudder (30) attached at a position in front of said propeller (20).

11. A ship as claimed in any of claims 7-10, further comprising:
- a support structure (15; 13', 60) for the screw propeller (20);
- the screw propeller (20) being rotatably mounted to the support structure (15; 13', 60) to form an assembly attached adjacent the transom (13).

12. A ship as claimed in any of claims 7-11, wherein the screw propeller (20) is arranged on a thruster unit (6), preferably forming a containerized unit (6, 60).

13. A ship as claimed in any of claims 7-11, wherein the transom (13) has at least one notch for attaching a containerized pod propulsor (6), and the containerized pod propulsor (6) is secured mechanically in the transom (13) by hydraulic controlled stud bolts.

14. A ship as claimed in any of claims 7-13, said ship having a single screw propeller (20).

15. A ship as claimed in any of claims 7-13, said ship being a twin screw ship.

16. A ship as claimed in any of claims 7-15, said ship being a multi propulsive ship.

## Patentansprüche

1. Verfahren, um ein Schiff mit einem Schraubenpropeller (20) mit großem Durchmesser zu versehen, wobei das Schiff einen Rumpf (10) aufweist, der bei Reisegeschwindigkeit eine ansteigende Welle erzeugt, in einem Abstand hinter einem Heckspiegel (13) des Rumpfs, wobei das Schiff einen vertikalen Abstand (H) zwischen einer Grundlinie (11) des Rumpfs (10) und der Wasserlinie (16) des Schiffs aufweist, wobei das Verfahren umfasst:
- Bereitstellen eines Schraubenpropellers (20) mit einem Durchmesser, der 50-200% des vertikalen Abstands (H) beträgt;
**dadurch gekennzeichnet, dass** es umfasst
- den Schraubenpropeller (20) in dem Abstand hinter dem Heckspiegel (13) drehbar an dem Rumpf (10) zu montieren.

2. Verfahren nach Anspruch 1, wobei der Propeller (20) einen Durchmesser aufweist, der größer als 100% des vertikalen Abstands (H) ist, und so positioniert ist, dass der Propeller (20) unterhalb der Krone (41) der Welle eingetaucht ist, wenn das Schiff bei Reisegeschwindigkeit angetrieben wird.

3. Verfahren nach Anspruch 1 oder 2, wobei der Schraubenpropeller (20) einen Durchmesser aufweist, der 85-150% des vertikalen Abstands (H) beträgt.

4. Verfahren nach Anspruch 1, 2 oder 3, weiter umfassend Bereitstellen eines Ruders (30) vor dem Propeller (20).

5. Verfahren nach einem der Ansprüche 1-4, weiter umfassend:
- Bereitstellen einer Stützstruktur (15; 13', 60) nahe des Hecks (14) des Schiffs (5);
- Montieren des Schraubenpropellers (20) drehbar an der Stützstruktur (15; 13', 60), um eine Baugruppe zu bilden.

6. Verfahren nach Anspruch 5, weiter umfassend
- Anbringen der Stützstruktur (15), um achtern des Heckspiegels (13) vorzuragen.

7. Schiff, das aufweist:
- einen Rumpf (10), der eine ansteigende Welle in einem Abstand hinter einem Heckspiegel (13) des Rumpfs (10) erzeugt, wenn das Schiff bei einer Reisegeschwindigkeit angetrieben wird;
- einen vertikalen Abstand (H) zwischen einer Grundlinie (11) des Rumpfs (10) und einer Wasserlinie (16) des Schiffs (1); und
- einen Schraubenpropeller (20) mit großem Durchmesser, der einen Durchmesser aufweist, der 50-200% des vertikalen Abstands (H) beträgt;
**dadurch gekennzeichnet, dass** der Schraubenpropeller (20) mit großem Durchmesser in dem Abstand hinter dem Heckspiegel (13) drehbar an dem Rumpf (10) montiert ist.

8. Schiff nach Anspruch 7, wobei der Propeller (20) einen Durchmesser aufweist, der größer als 100% des vertikalen Abstands (H) ist, und so positioniert ist, dass der Propeller (20) unterhalb der Krone (41) der Welle eingetaucht ist, wenn das Schiff bei Reisegeschwindigkeit angetrieben wird.

9. Schiff nach Anspruch 7 oder 8, wobei der Schraubenpropeller (20) einen Durchmesser aufweist, der 85-150% des vertikalen Abstands (H) beträgt.

10. Schiff nach Anspruch 8 oder 9, weiter umfassend ein Ruder (30), das in einer Position vor dem Propeller (20) angebracht ist.

11. Schiff nach einem der Ansprüche 7-10, weiter umfassend:
- eine Stützstruktur (15; 13', 60) für den Schraubenpropeller (20);
- wobei der Schraubenpropeller (20) drehbar an der Stützstruktur (15; 13', 60) montiert ist, um eine Baugruppe zu bilden, die nahe des Heckspiegels (13) angebracht ist.

12. Schiff nach einem der Ansprüche 7-11, wobei der Schraubenpropeller (20) an einer Strahlrudereinheit (6) angeordnet ist, und bevorzugt eine Einheit (6, 60) in einem Gehäuse bildet.

13. Schiff nach einem der Ansprüche 7-11, wobei der Heckspiegel (13) mindestens eine Einbuchtung aufweist, um einen in einem Gehäuse enthaltenen Pod-Antrieb (6) anzubringen, und wobei der in einem Gehäuse enthaltene Pod-Antrieb (6) durch hydraulisch gesteuerte Stehbolzen mechanisch in dem Heckspiegel (13) gesichert ist.

14. Schiff nach einem der Ansprüche 7-13, wobei das Schiff einen einzelnen Schraubenpropeller (20) aufweist.

15. Schiff nach einem der Ansprüche 7-13, wobei das Schiff ein Doppelschraubenschiff ist.

16. Schiff nach einem der Ansprüche 7-15, wobei das Schiff ein mehrfach angetriebenes Schiff ist.

## Revendications

1. Procédé pour fournir à un navire un propulseur à hélice à grand diamètre (20), ledit navire présentant une coque (10) développant une vague montante à la vitesse de croisière à une distance derrière une arcasse (13) de la coque, ledit navire présentant une distance verticale (H) entre une ligne de base (11) de la coque (10) et la ligne d'eau (16) du navire, ledit procédé comprenant :
- la fourniture d'un propulseur à hélice (20) avec un diamètre qui représente 50 à 200 % de la distance verticale (H) ; **caractérisé en ce qu'**il comprend
- le montage du propulseur à hélice (20) de manière rotative sur la coque (10) à ladite distance derrière l'arcasse (13).

2. Procédé selon la revendication 1, dans lequel le propulseur (20) présente un diamètre qui représente plus de 100 % de la distance verticale (H) et est positionné de sorte que le propulseur (20) soit immergé sous le sommet (41) de la vague lors de la propulsion du navire à la vitesse de croisière.

3. Procédé selon la revendication 1 ou 2, dans lequel le propulseur à hélice (20) présente un diamètre qui représente 85 à 150 % de la distance verticale (H).

4. Procédé selon la revendication 1, 2 ou 3, comprenant en outre la fourniture d'un gouvernail (30) en face dudit propulseur (20).

5. Procédé selon l'une quelconque des revendications 1 à 4, comprenant en outre :
- la fourniture d'une structure de support (15 ; 13', 60) de manière adjacente à la poupe (14) du navire (5) ;
- le montage du propulseur à hélice (20) de manière rotative sur la structure de support (15 ; 13' ; 60) pour former un ensemble.

6. Procédé selon la revendication 5, comprenant en outre
- l'attache de la structure de support (15) pour faire saillie à l'arrière de l'arcasse (13).

7. Navire présentant :
une coque (10) qui développe une vague montante à une distance derrière une arcasse (13) de la coque (10) lorsque le navire est propulsé à une vitesse de croisière ;
une distance verticale (H) entre une ligne de base (11) de la coque (10) et une ligne d'eau (16) du navire (1) ; et
un propulseur à hélice à grand diamètre (20) présentant un diamètre qui représente 50 à 200 % de la distance verticale (H) ; **caractérisé en ce que** ledit propulseur à hélice à grand diamètre (20) est monté de manière rotative sur la coque (10) à ladite distance derrière l'arcasse (13).

8. Navire selon la revendication 7, dans lequel le propulseur (20) présente un diamètre qui représente plus de 100 % de la distance verticale (H) et est positionné de sorte que le propulseur (20) soit immergé sous le sommet (41) de la vague lors de la propulsion du navire à une vitesse de croisière.

9. Navire selon la revendication 7 ou 8, dans lequel le propulseur à hélice (20) présente un diamètre qui représente 85 à 150 % de la distance verticale (H).

10. Navire selon la revendication 8 ou 9, comprenant en outre un gouvernail (30) attaché sur une position en face dudit propulseur (20).

11. Navire selon l'une quelconque des revendications 7 à 10, comprenant en outre :
- une structure de support (15 ; 13', 60) pour le propulseur à hélice (20) ;
- le propulseur à hélice (20) étant monté de manière rotative sur la structure de support (15 ; 13', 60) pour former un ensemble attaché de manière adjacente à l'arcasse (13).

12. Navire selon l'une quelconque des revendications 7 à 11, dans lequel le propulseur à hélice (20) est agencé sur une unité de propulsion (6), formant de préférence une unité conteneurisée (6, 60).

13. Navire selon l'une quelconque des revendications 7 à 11, dans lequel l'arcasse (13) présente au moins une encoche pour l'attache d'un propulseur par nacelle conteneurisé (6), et le propulseur par nacelle conteneurisé (6) est fixé mécaniquement dans l'arcasse (13) par des boulons filetés à commande hydraulique.

14. Navire selon l'une quelconque des revendications 7 à 13, ledit navire présentant un seul propulseur à hélice (20).

15. Navire selon l'une quelconque des revendications 7 à 13, ledit navire étant un navire à double hélice.

16. Navire selon l'une quelconque des revendications 7 à 15, ledit navire étant un navire à propulsion multiple.
